# EUROPEAN PATENT APPLICATION

(11) **EP 4 340 544 A1**
(43) Date of publication of application: **20.03.2024**
(21) Application number: 21942041.1
(22) Date of filing: 21.05.2021
(51) Int. Cl.: H05B 6/76, H05B 6/64

(54) **COOKING APPLIANCE**

(30) Priority: 10.05.2021 KR 20210060343
(71) Applicant: LG Electronics Inc., Yeongdeungpo-gu Seoul 07336 (KR)
(72) Inventor: HONG, Jaepyo, Seoul 08592 (KR); HA, Junghyeong, Seoul 08592 (KR); CHAE, Yunbyung, Seoul 08592 (KR); SHIN, Myeongjun, Seoul 08592 (KR); SIM, Sunghun, Seoul 08592 (KR)
(74) Representative: Vossius & Partner Patentanwälte Rechtsanwälte mbB
(86) International application number: PCT/KR2021/006335
(87) International publication number: WO 2022/239893

(57) **Abstract**

The purpose of the present disclosure is to provide a cooking appliance in which a shielding filter serving to block microwaves generated from an MW heating module and pass a magnetic field, generated from an IH heating module, therethrough is tightly coupled to a plate. The cooking appliance may comprise: a housing which has a cavity formed therein; a door which is connected to the housing and opens/closes the cavity; an MW heating module which emits microwaves to the cavity; a working coil module which emits a magnetic field to the cavity; a plate in which a center hole for guiding a magnetic field to the cavity is formed; and a shielding filter which is disposed between the plate and the working coil module, wherein the plate has a plurality of grooves formed around the center hole.

## Description

### [Technical Field]

The present disclosure relates to a cooking appliance.

### [Background Art]

Various types of cooking appliances are used to heat food at home or in restaurants. For example, various cooking appliances such as microwave ovens, induction heating electric stoves, and grill heaters are used.

A microwave oven is a high-frequency heating type cooking appliance that uses the molecules in a high-frequency electric field to vibrate violently and generate heat, enabling it to heat food evenly in a short period of time.

An induction heating type electric stove is a cooking appliance that heats objects to be heated using electromagnetic induction. Specifically, the induction heating type electric stove uses the magnetic field generated around the coil when high-frequency power of a certain size is applied to the coil to generate an eddy current in the object to be heated made of metal, thereby causing the object itself can be heated.

A grill heater is a cooking appliance that heats food by radiating or converting infrared heat and because the infrared heat penetrates the food, the infrared heat can cook the food evenly throughout.

In this way, as cooking appliance using various types of heat sources are released, the number and types of cooking appliance owned by users have increased, and there is a problem that these cooking appliance take up a lot of space in living spaces. Accordingly, users' demand for complex cooking appliance equipped with a plurality of heating modules is increasing. In addition, there is a need to develop a cooking appliance that uses multiple heating methods simultaneously so that food in the object to be heated can be cooked more uniformly and quickly.

However, in the case of a cooking appliance having multiple heat sources, a problem may occur in which one heat source affects the other heat sources. For example, microwaves may heat the induction heating coil, causing damage to the induction heating coil. Therefore, in the case of a cooking appliance having multiple heat sources, a method of minimizing the influence of each heat source on other heat sources may be required.

### [Disclosure]

### [Technical Problem]

The present disclosure seeks to minimize the impact of microwaves generated from an MW heating module on the induction heating coil.

The present disclosure seeks to provide a cooking appliance in which a shielding filter that shields microwaves generated from the MW heating module and passes the magnetic field generated by the IH heating module is closely coupled to the plate.

The present disclosure seeks to provide a cooking appliance in which the gap between the shielding filter and the plate is minimized.

The present disclosure seeks to minimize the problem of a gap occurring between the shielding filter and the plate due to the flatness of the plate not being maintained in at least one process for fixing the shielding filter to the plate.

### [Technical Solution]

In the present disclosure, the area coupled to the shielding filter may be formed in the shape of a leaf spring so that the shielding filter is tightly coupled to the plate.

In the present disclosure, protrusions may be formed on the shielding filter or the plate so that the shielding filter and the plate are coupled in line contact.

The present disclosure includes a holder welded to a plate, and the working coil module can be disposed through a bracket fastened to the holder.

A cooking appliance according to an embodiment of the present disclosure includes a housing having a cavity; a door connected to the housing and opening and closing the cavity; an MW heating module emitting microwaves into the cavity; a working coil module emitting a magnetic field into the cavity; a plate having a central hole formed therein to guide the magnetic field to the cavity; and a shielding filter disposed between the plate and the working coil module, in which the plate may have a plurality of grooves formed around the central hole.

The plate may be formed with a plurality of tight-contact parts spaced apart by the plurality of grooves.

The plurality of tight-contact parts may be leaf springs.

The width of the groove may be 5 mm or less.

The length of the section where the plate and the shielding filter overlap in a vertical direction may be 30 mm or less.

Each of the plurality of tight-contact parts may be formed with a protrusion protruding downward.

The shielding filter may be formed of graphite.

The shielding filter may be formed in a two-layer structure in which a first substrate with a slit in a first direction and a second substrate with a slit in a second direction are disposed in the vertical direction.

The cooking appliance may further include a bracket on which at least one of the shielding filter and the working coil module is seated.

The cooking appliance may further include a holder coupled between the bracket and the plate.

The holder may be coupled to the bracket through a bolt and coupled to the plate through welding.

The holder may be formed with a welding part coupled to the plate and a fastening part coupled with the bracket.

The welding part and the fastening part may be disposed alternately.

The welding part may be formed higher than the fastening part.

The plate may include glass covering the plurality of grooves.

### [Advantageous Effect]

According to an embodiment of the present disclosure, the gap between the shielding filter and the plate is minimized, so there is an advantage in minimizing the problem of microwaves damaging the induction heating coil.

According to an embodiment of the present disclosure, even if at least a portion of the plate is curved, the area coupled to the shielding filter is brought into tight-contact by a leaf spring effect, which has the advantage of minimizing the gap between the shielding filter and the plate.

According to an embodiment of the present disclosure, since the shielding filter and the plate are in line contact, there is an advantage that the tight-contact force between the shielding filter and the plate is maintained or strengthened even without additional pressure.

According to an embodiment of the present disclosure, there is an advantage that high performance of the shielding filter is not required because the shielding effect of microwaves is significantly improved just by the coupling structure of the shielding filter and the plate.

According to an embodiment of the present disclosure, there is no need to fasten bolts to the plate, and since the shielding filter and the working coil module are coupled to the plate through minimal fusion, there is an advantage that deformation of the plate is minimized.

### [Description of Drawings]

FIG. 1 is a perspective view illustrating a cooking appliance according to an embodiment of the present disclosure.
FIG. 2 is a cross-sectional view illustrating a cooking appliance according to an embodiment of the present disclosure.
FIG. 3 is a cross-sectional view illustrating a structure in which a shielding filter and a working coil module are coupled to a plate according to an embodiment of the present disclosure.
FIG. 4 is an exploded view illustrating a plate, a holder, a shielding filter, a working coil module, and a bracket according to an embodiment of the present disclosure.
FIG. 5 is an enlarged view of the square box illustrated in FIG. 4.
FIG. 6 is a cross-sectional view illustrating a plate and a shielding filter according to an embodiment of the present disclosure.
FIG. 7 illustrates the results of an experiment to derive the tight-contact length between the plate and the shielding filter according to an embodiment of the present disclosure.
FIGS. 8 and 9 illustrate the results of testing the performance of the shielding structure of the cooking appliance according to an embodiment of the present disclosure.

### [Best Mode]

Hereinafter, embodiments according to the present disclosure will be described in detail with reference to the attached drawings. In the drawings, identical reference numerals are used to indicate identical or similar components.

Below, a cooking appliance according to an embodiment of the present disclosure will be described.

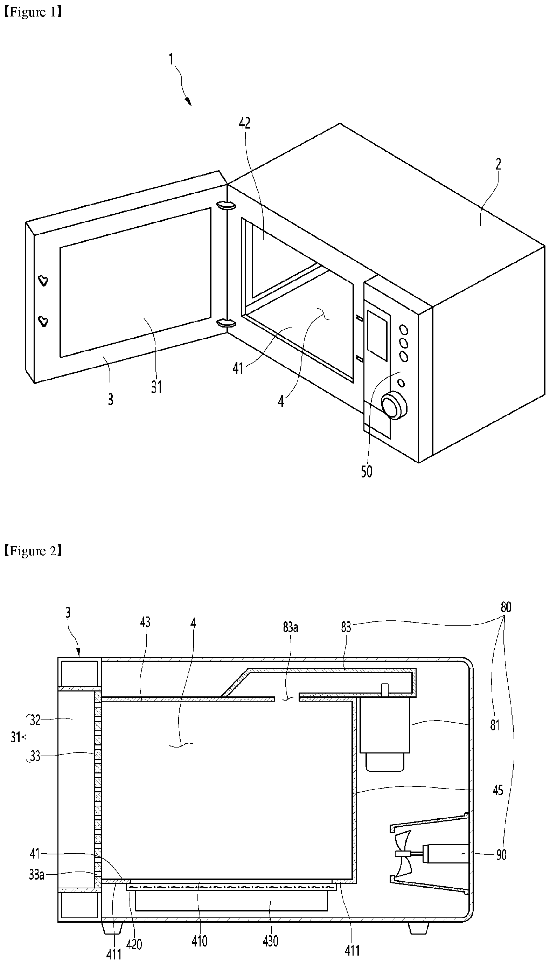

FIG. 1 is a perspective view illustrating a cooking appliance according to an embodiment of the present disclosure.

The cooking appliance 1 according to an embodiment of the present disclosure may include a housing 2 and a door 3 connected to the housing 2.

A cavity 4 may be formed in the housing 2, and the cavity 4 may be a cooking chamber. The cavity 4 may be a cooking space where an object to be heated is placed.

An input interface 50 may be formed on the outer surface of the housing 2. The input interface 50 can receive input for operating the cooking appliance from the user.

The cavity 4 can be opened or closed by the door 3. The door 3 may be attached to the front surface portion of the housing 2 to be open and closed. The door 3 can open and close the cavity 4. A window 31 may be formed in the door 3. The user can check the inside of the cavity 4 through the window 31 when the cavity 4 is closed.

The cavity 4 may be formed from first to fifth surfaces and may be open or closed according to the position of the door 3. The first surface of the cavity 4 may be the bottom surface 41, the second surface may be the ceiling surface (43, see FIG. 2), the third surface may be the rear surface (45, see FIG. 2), and the fourth and fifth surfaces may be on both sides. The ceiling surface is the surface facing the bottom surface 41, and the rear surface is the surface facing the door 3 when the cavity 4 is closed, and both sides can be connected to the bottom surface, ceiling surface, and rear surface, respectively.

FIG. 2 is a cross-sectional view illustrating a cooking appliance according to an embodiment of the present disclosure.

The door 3 can open and close the cavity 4. A window 31 may be formed in the door 3, and the window 31 may include a window unit 32 and a shielding unit 33.

The window unit 32 may be made of a transparent or translucent material. The user can view the inside of the cavity 4 through the window unit 32. The outer surface of the window unit 32 may face the outside of the cooking appliance 1, and the inner surface of the window unit 32 may face the inside of the cooking appliance 1.

The shielding unit 33 may be mounted on the inner surface of the window unit 32. The shielding unit 33 can shield microwaves in the cavity 4 from moving outside the cooking appliance 1 through the door 3.

The shielding unit 33 may be an iron mesh. A plurality of shielding holes 33a may be formed in the shielding unit 33, and the size of the shielding holes 33a may be larger than the wavelength of visible light and smaller than the wavelength of microwaves. Accordingly, the user can see the inside of the cavity 4 through the shielding hole 33a, and microwaves do not pass through the shielding hole 33a.

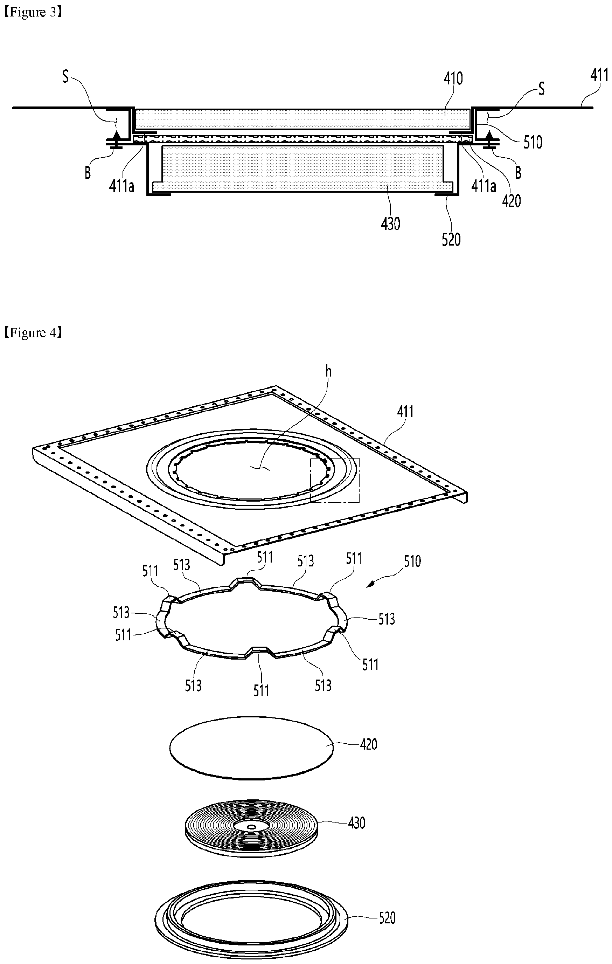

The housing 2 may be provided with a plate 411 forming the first surface (for example, bottom surface 41) of the cavity 4. A central hole (h, see FIG. 4) is formed inside the plate 411, and glass 410 may be placed in the central hole h. The central hole h may be a passage through which the magnetic field generated in the working coil module 430 moves to the cavity 41. The magnetic field generated in the working coil module 430 may pass through the central hole h and move to the cavity 41. The central hole h can guide the magnetic field generated in the working coil module 430 to the cavity 41.

The plate 411 may be meant to include glass 410. In other words, the plate 411 may include glass 410. Plate 411 may form the floor of the cooking chamber.

An object to be heated may be placed on the glass 410. The glass 410 may be formed of a non-metallic component to allow the magnetic field generated by the working coil module 430 to pass through. Glass 410 may be formed of a glass material. For example, the glass 410 may be made of ceramic glass.

The plate 411 may be a cover that forms the first surface 41 of the cavity 4 and covers the working coil module 430 at the same time.

The working coil module 430 can provide an induction heating type heat source to the cavity 4. The working coil module 430 may emit a magnetic field toward the cavity 4. The frequency band of the magnetic field emitted by the working coil module 430 may be approximately 20 to 70 kHz.

The working coil module 430 can directly or indirectly heat the object to be heated in the cavity 4 by generating a magnetic field through the working coil.

Specifically, the working coil module 430 may include a working coil and a ferrite. The ferrite is mounted below the working coil and can shield the magnetic field generated downward when the working coil is driven.

An inverter or the like for driving the working coil may be further provided in the housing 2. The working coil can be driven by an inverter to generate a magnetic field.

In addition, according to the embodiment, the working coil module 430 may further include an insulating material, and the insulating material may be placed on the upper portion of the working coil.

The working coil module 430 can heat an object to be heated by an induction heating method, and may be provided to overlap the glass 410 in the longitudinal direction (i.e., in the vertical direction or in the up and down direciton). Glass 410 can pass the magnetic field generated from the working coil.

The MW heating module 80 can provide microwaves to cavity 4. The MW heating module 80 may emit microwaves into cavity 4. The frequency band of the microwaves emitted by the MW heating module 80 may be any one of 13.56 MHz, 27.12 MHz, 40.68 MHz, 433 MHz, 915 MHz, and 2450 MHz. In this specification, it is assumed that the frequency band of microwaves is 2450 MHz, but this is only an example for convenience of explanation.

The MW heating module 80 may be installed close to any one of the second to fifth surfces of the cavity 4. For example, the MW heating module 80 may supply microwaves to the cavity 4 through a second surface of the cavity 4, where the second surface may be the ceiling surface 43, but this is just an example. In other words, the second surface may be at least one of the remaining surfaces excluding the surface where the magnetic field is emitted by the working coil module 430. Hereinafter, it is assumed that the second surface is the ceiling surface 43.

The MW heating module 80 includes a magnetron 81, a waveguide 83, and a cooling fan 90, and one side of the waveguide 83 may be connected to the magnetron 81 and the other side thereof may be connected to the cavity 4. At least one slot 83a through which microwaves pass may be formed on the ceiling surface 43 of the cavity 4. The cooling fan 90 may be installed around the magnetron 81 to cool the magnetron 81. Additionally, the cooling fan 90 may cool the heat around the working coil.

Meanwhile, in FIG. 2, the cooking appliance 1 is illustrated as having only the working coil module 430 and the MW heating module 80, but according to the embodiment, the cooking appliance 1 may further include a grill heater module (not illustrated).

The grill heater module (not illustrated) may supply radiant heat to heat the food contained in the cavity 4. The grill heater module (not illustrated) includes a heating part (not illustrated) having an infrared heat ray, and can radiate or convect infrared heat generated from the heating part (not illustrated) to the cavity 4.

In other words, according to the embodiment, the cooking appliance 1 may be provided with a working coil module 430, an MW heating module 80, and a grill heater module (not illustrated), and the working coil module 430 emits a magnetic field toward the first surface of the cavity 4, the MW heating module 80 supplies microwaves to the cavity 4 through the second surface of the cavity 4, and the grill heater module (not illustrated) can supply radiant heat to the cavity 4 through the third surface of the cavity 4. In this case, objects to be heated and food placed in the cavity 4 may be heated by the working coil module 430, the MW heating module 80, and the grill heater module (not illustrated).

In this specification, it is assumed that the cooking appliance 1 includes a working coil module 430 and a MW heating module 80, but since this is only an example for convenience of explanation, it is reasonable that the cooking appliance 1 is not limited thereto. In this case, the object to be heated and food placed in the cavity 4 may be heated by the working coil module 430 and the MW heating module 80.

Meanwhile, a problem may occur in which the microwaves emitted from the MW heating module 80 pass through the glass 410 and heat the working coil module 430, especially the working coil. In other words, because the working coil may be damaged by the MW heating module 80, a structure is required to shield microwaves generated from the MW heating module 80 from reaching the working coil module 430. Accordingly, the cooking appliance 1 may further include a shielding filter 420.

The shielding filter 420 may be disposed below the plate 411. Specifically, the shielding filter 420 may be disposed between the plate 411 and the working coil module 430.

The shielding filter 420 shields microwaves generated from the MW heating module 80 and allows the magnetic field generated from the working coil module 430 to pass through. In other words, the shielding filter 420 may be a filter that shields microwaves.

According to the first embodiment, the shielding filter 420 may be formed of graphite. For example, the shielding filter 420 may be formed of graphite with a thickness of 0.3T. Due to the nature of the graphite material, the shielding filter absorbs high-frequency waves, that is, microwaves, so the shielding filter can shield microwaves from moving to the working coil module 430, and as the shielding filter is formed as thin as about 0.3T, the shielding filter can allow magnetic fields to pass through.

According to the second embodiment, the shielding filter 420 may be formed in a two-layer structure in which a first substrate with slits formed in the first direction and a second substrate with slits formed in the second direction are disposed in the vertical direction. One of the first and second directions may be a horizontal direction, and the other may be an longitudinal direction. In other words, the first direction and the second direction may be perpendicularto each other. Accordingly, because microwaves do not pass through at least one of the first and second substrates due to their nature, movement to the working coil module 430 is shielded, and the magnetic field generated from the working coil can pass through each slit and can move to the cavity 40. Meanwhile, the material of the substrate may be copper foil, but since this is only an example, it is reasonable that it is not limited thereto.

The above-described embodiments are merely illustrative, and the shielding filter 420 may be formed of various materials or structures, such as a porous metal plate or aluminum thin film.

Meanwhile, even if the performance of the shielding filter 420 is good, if there is a gap between the shielding filter 420 and the plate 411, the problem of damage to the induction heating coil still exists because microwaves leak through the gap. Therefore, to prevent microwaves from leaking between the shielding filter 420 and the plate 411, the shielding filter 420 requires a structure that is placed in tight-contact with the plate 411. In addition, a structure in which the magnetic field generated by the working coil module 430 is placed in tight-contact with the plate 411 may be required to be concentrated in the cavity 4. Accordingly, a fastening hole may be formed in the plate 411 or welding or the like can be done, so that at least one of the shielding filter 420 or the working coil module 430 can be directly or indirectly coupled thereto.

However, the plate 411 may be a thin metal plate with a thickness of approximately 0.4 to 0.7 mm. In this case, it is difficult to maintain the flatness of the plate 411 during the coupling process with the shielding filter 420, and as a result, a lifting phenomenon occurs in which a gap is formed between the shielding filter 420 and the plate 411, and problems may arise with microwaves passing through this gap.

Therefore, the present disclosure requires at least one of the shielding filter 420 or the working coil module 430 to be directly or indirectly coupled to the plate 411, and to have a tight-coupling structure that minimizes gaps when coupled.

In the cooking appliance 1 according to an embodiment of the present disclosure, an area of the plate 411 coupled to at least one of the shielding filter 420 or the working coil module 430 may be formed to have a leaf spring effect.

In particular, the cooking appliance 1 may be formed so that the area of the plate 411 in contact with the shielding filter 420 has a leaf spring effect.

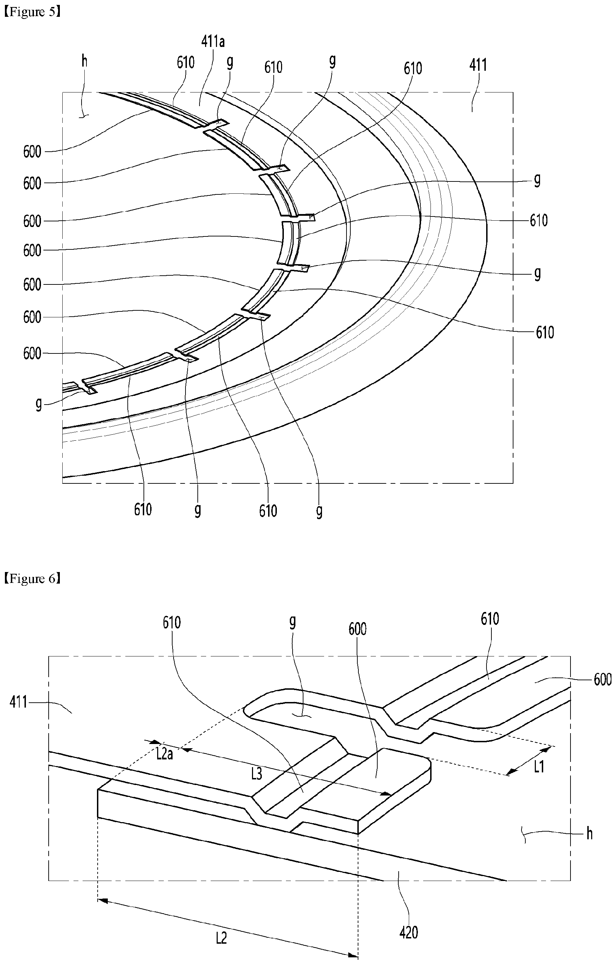

FIG. 3 is a cross-sectional view illustrating a structure in which a shielding filter and a working coil module are coupled to a plate according to an embodiment of the present disclosure, FIG. 4 is an exploded view illustrating a plate, a holder, a shielding filter, a working coil module, and a bracket according to an embodiment of the present disclosure, and FIG. 5 is an enlarged view of the square box illustrated in FIG. 4.

A seating part 411a on which the glass 410 is seated may be formed on the plate 411. Glass 410 may be disposed on the upper surface of the seating part 411a.

Additionally, the shielding filter 420 may be placed in tight-contact with the lower surface of the seating part 411a, and the working coil module 430 may be placed below the shielding filter 420.

In addition, the cooking appliance 1 may further include a holder 510 or bracket 520 to minimize exposure of the bolt B to the upper surface of the plate 411 and minimize the number of welds.

The holder 510 may be coupled between the bracket 520 and the plate 411. Specifically, the holder 510 may be coupled to the plate 411 through welding, and the bracket 520 may be coupled to the holder 510 through at least one bolt B. The shielding filter 420 or the working coil module 430 may be seated on the bracket 520. In other words, at least one of the shielding filter 420 and the working coil module 420 may be seated on the bracket 520.

Referring to FIG. 3, a welding part 511 and a fastening part 513 may be formed in the holder 510. The welding part 511 may be coupled to the plate 411, and the fastening part 513 may be coupled to the bracket 520. For example, a plurality of welding parts 511 and a plurality of fastening parts 513 are formed in the holder 510, and the welding parts 511 and fastening parts 513 may be disposed alternately.

The welding part 511 may be coupled to the lower surface of the plate 411 through welding, and the fastening part 513 may be coupled to the bracket 520 through a bolt B. Through this, the bracket 520 can be indirectly coupled to the plate 411.

The welding part 511 may be formed higher than the fastening part 513. The fastening part 513 may be formed lower than the welding part 511. Accordingly, a space S may be formed between the plate 411 and the fastening part 513 in which the bolt B that couples the bracket 520 to the holder 510 is disposed.

Referring to FIG. 5, a plurality of grooves g may be formed in the seating part 411a. Specifically, a plurality of grooves g may be formed in the plate 411 around the central hole h. The inner circumference of the plate 411 forming the central hole h may be formed as a discontinuous line by the plurality of grooves g. Glass 410 may cover a plurality of grooves g. Additionally, the glass 410 may also cover the central hole h.

A plurality of grooves g may be formed to be spaced apart from each other along the central hole h. Accordingly, a plurality of tight-contact parts 600 divided by a plurality of grooves g may be formed in the seating part 411a. In other words, a plurality of tight-contact parts 600 spaced apart by a plurality of grooves g may be formed on the plate 411.

The tight-contact parts 600 and grooves g may be disposed alternately.

A plurality of tight-contact parts 600 may be formed on the innermost side of the plate 411.

A plurality of tight-contact parts 600 may be formed along the inner circumference of the plate 411. The tight-contact parts 600 may be disposed to be spaced apart from each other around the central hole h.

The plurality of tight-contact parts 600 disposed to be spaced apart in this way may have a leaf spring effect. In other words, the plurality of tight-contact parts 600 may form a leaf spring. Specifically, since each of the plurality of tight-contact parts 600 is in tight-contact with the shielding filter 420, even if some portions are bent, elasticity acts due to the tight-close force between the other tight-contact parts 600 and the shielding filter 420, and thus the gap in the bent part can be minimized.

If the groove g or the tight-contact part 600 is not formed in the seating part 411a, since the seating part 411a is a continuous surface, if deformation occurs in at least a portion of the seating part 411a, even if pressure is applied to bring the shielding filter 420 into close contact, a gap may occur in at least a portion between the seating part 411a and the shielding filter 420. However, as described above, since the seating part 411a, which is divided into the tight-contact parts 600 by the groove g, is not a continuous surface, pressure is applied to close the shielding filter 420 from bottom to top, and in this case, the deformation is attenuated and the tight-contact may occur.

Meanwhile, according to an embodiment, a protrusion 610 protruding downward may be formed in the tight-contact part 600. The protrusion 610 may be in line contact with the shielding filter 420. These protrusions 610 can maintain or strengthen the tight-close force between the close contact part 600 and the shielding filter 420.

The protrusion 610 can increase the spring force on the tight-contact part 600 by the depth thereof. The depth of the protrusion 610 may be determined by the width of the groove g, the thickness or material of the plate 411, the tight-contact length between the plate 411 and the shielding filter 420 or the like.

In addition, protrusions 610 may be formed on each of the plurality of tight-contact parts 600. Accordingly, the plate 411 may make at least two line contacts with the shielding filter 420. When two or more line contacts are formed in this way, a permanently deformed curve occurs in at least a portion of the plate 411, thereby minimizing the problem of locally occurring lifting.

FIG. 6 is a cross-sectional view illustrating a plate and a shielding filter according to an embodiment of the present disclosure.

The width L1 of the groove g may be less than or equal to the first length. For example, the first length may be 5 mm or less.

In the area where the groove g is formed, the contact length L2a between the plate 411 and the shielding filter 420 is shorter than the second length L2, which will be described later. Therefore, since there is a high possibility that microwaves will pass between the tight-contact part 600 and the shielding filter 420 in the area where the groove g is formed, the width of the groove g is preferably formed to be narrow, and the width L1 of the groove g may be 5 mm or less. However, the width L1 of the groove g may vary according to the second length L2, which is the tight-contact length between the plate 411 and the shielding filter 420.

The tight-contact length between the plate 411 and the shielding filter 420 may be the length of a section where the plate 411 and the shielding filter 420 overlap in the vertical direction.

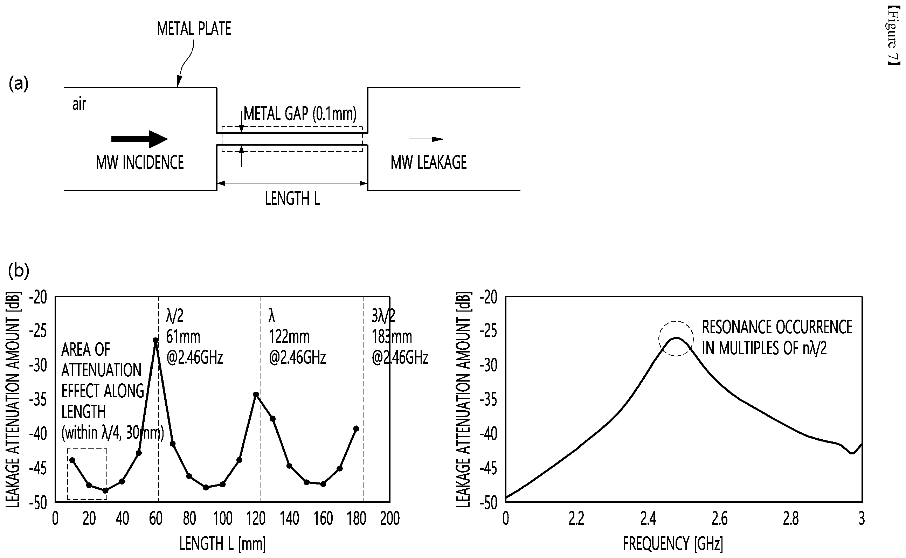

The tight-contact length between the plate 411 and the shielding filter 420 may be less than or equal to the second length L2. If the tight-contact length between the plate 411 and the shielding filter 420 is longer than the second length, there is a high possibility that microwaves with a frequency of 2450 MHz will pass between the plate 411 and the shielding filter 420 due to the resonance phenomenon and thus shielding performance may deteriorate. Therefore, it is desirable to design it to be less than the second length L2, which can be derived through measurement as illustrated in FIG. 7.

FIG. 7 illustrates the results of an experiment to derive the tight-contact length between the plate and the shielding filter according to an embodiment of the present disclosure.

As illustrated in (a) of FIG. 7, the size of the microwave leaking through the gap can be measured while variously adjusting the length of the passage having a predetermined gap (for example, 0.1 mm). The measurement result may be the same as (b) of FIG. 7. First, due to the occurrence of resonance of nxλ/2 (n=1, 2, 3...), there is no tendency for the leakage attenuation effect to increase as the gap length increases. However, it can be confirmed that the attenuation as the length increases is effective within λ/4.

Therefore, it can be seen that when the frequency is 2450 MHz, the frequency attenuation effect is highest when the gap is 30 mm. Accordingly, the second length L2, which is the tight-contact length between the plate 411 and the shielding filter 420, may be preferably designed to be 30 mm.

In other words, the tight-contact length between the plate 411 and the shielding filter 420 may be less than or equal to the second length, and the second length may be 30 mm or less.

Meanwhile, the tight-contact length between the plate 411 and the shielding filter 420 may be the same as the tight-contact length between the tight-contact part 600 and the shielding filter 420. In other words, the tight-contact part 600 refers to a portion of the plate 411 corresponding to the second length L2.

Meanwhile, the length L3 of the groove g may be less than or equal to the third length. For example, the third length may be 10 mm or less. The length L3 of the groove g may vary according to the tight-contact length L2 between the plate 411 and the shielding filter 420.

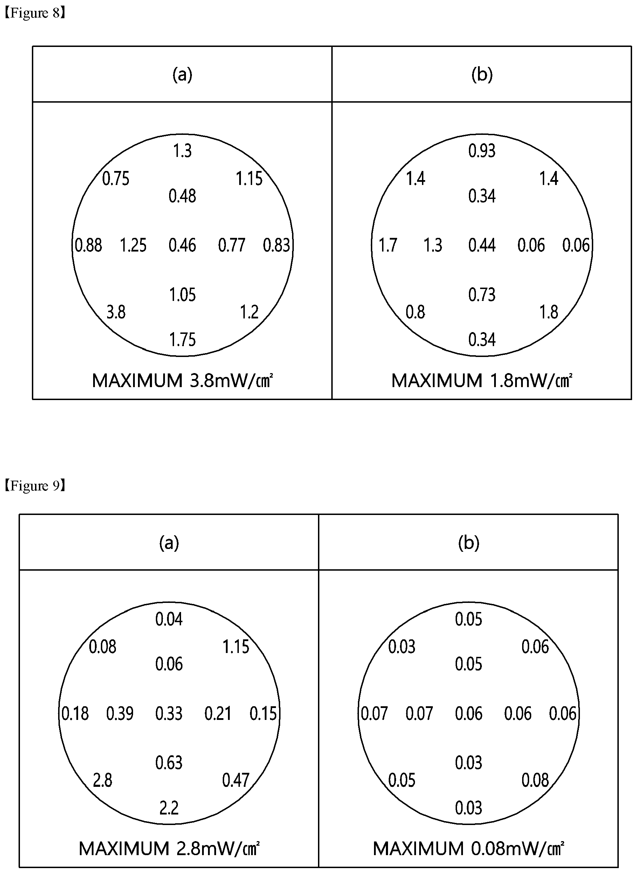

FIGS. 8 and 9 illustrate the results of testing the performance of the shielding structure of the cooking appliance according to an embodiment of the present disclosure.

In particular, FIG. 8 illustrates test results for a cooking appliance equipped with a two-layer structure shielding filter in which each slit is disposed orthogonally. (a) of FIG. 8 is a view illustrating the measured values of microwaves passing through the shielding filter 420 at each measurement point when the shielding filter 420 is coupled to the plate 411 without the groove g. It is a drawing. (b) of FIG. 8 is a view illustrating the measured values of microwaves passing through the shielding filter 420 at each measurement point when the shielding filter 420 is coupled to the plate 411 with the groove g.

The maximum value of the measured values in (a) of FIG. 8 is 3.8mW/cm², the maximum value of the measured values in (b) of FIG. 8 is 1.8mW/cm², and it can be seen that when a plurality of grooves g are formed around the central hole h of the plate 411, the shielding performance is improved.

FIG. 9 illustrates test results for a cooking appliance equipped with a shielding filter made of graphite. Likewise, (a) of FIG. 9 is a view illustrating the measured values of microwaves passing through the shielding filter 420 at each measurement point when the shielding filter 420 is coupled to the plate 411 without the groove g. (b) of FIG. 9 is a view illustrating the measured values of microwaves passing through the shielding filter 420 at each measurement point when the shielding filter 420 is coupled to the plate 411 with the groove g.

The maximum value of the measured values in (a) of FIG. 9 is 2.8mW/cm², the maximum value of the measured values in (b) of FIG. 9 is 0.08mW/cm², and it can be seen that when a plurality of grooves (g) are formed around the central hole h of the plate 411, the shielding performance is improved.

The above description is merely illustrative of the technical idea of the present disclosure, and various modifications and changes may be made thereto by those skilled in the art without departing from the essential characteristics of the present disclosure.

Therefore, the embodiments of the present disclosure are not intended to limit the technical spirit of the present disclosure but to illustrate the technical idea of the present disclosure, and the technical spirit of the present disclosure is not limited by these embodiments.

The scope of protection of the present disclosure should be interpreted by the appending claims, and all technical ideas within the scope of equivalents should be construed as falling within the scope of the present disclosure.

## Claims

1. A cooking appliance comprising:
a housing having a cavity;
a door connected to the housing and opening and closing the cavity;
an MW heating module emitting microwaves into the cavity;
a working coil module emitting a magnetic field into the cavity;
a plate having a central hole formed therein to guide the magnetic field to the cavity; and
a shielding filter disposed between the plate and the working coil module,
wherein the plate has a plurality of grooves formed around the central hole.

2. The cooking appliance of claim 1,
wherein the plate is formed with a plurality of tight-contact parts spaced apart by the plurality of grooves.

3. The cooking appliance of claim 2,
wherein the plurality of tight-contact parts are leaf springs.

4. The cooking appliance of claim 1,
wherein the width of the groove is 5 mm or less.

5. The cooking appliance of claim 2,
wherein the length of the section where the plate and the shielding filter overlap in a vertical direction is 30 mm or less.

6. The cooking appliance of claim 2,
wherein each of the plurality of tight-contact parts is formed with a protrusion protruding downward.

7. The cooking appliance of claim 1,
wherein the shielding filter is formed of graphite.

8. The cooking appliance of claim 1,
wherein the shielding filter is formed in a two-layer structure in which a first substrate with a slit in a first direction and a second substrate with a slit in a second direction are disposed in the vertical direction.

9. The cooking appliance of claim 1, further comprising:
a bracket on which at least one of the shielding filter and the working coil module is seated.

10. The cooking appliance of claim 9, further comprising:
a holder coupled between the bracket and the plate.

11. The cooking appliance of claim 10,
wherein the holder is coupled to the bracket through a bolt and coupled to the plate through welding.

12. The cooking appliance of claim 10,
wherein the holder is formed with a welding part coupled to the plate and a fastening part coupled with the bracket.

13. The cooking appliance of claim 12,
wherein the welding part and the fastening part are disposed alternately.

14. The cooking appliance of claim 13,
wherein the welding part is formed higher than the fastening part.

15. The cooking appliance of claim 1,
wherein the plate includes glass covering the plurality of grooves.
